# EUROPEAN PATENT SPECIFICATION

(11) **EP 0 604 610 B1**
(45) Date of publication and mention of the grant of the patent: **21.04.1999**
(21) Application number: 93913611.5
(22) Date of filing: 18.06.1993
(51) Int. Cl.: H04M 17/00

(54) **COIN/CARD OPERATED PUBLIC TELEPHONE AND ITS CONTROLLING METHOD**
ÖFFENTLICHER MÜNZFERNSPRECHER/KARTENFERNSPRECHER UND SEIN STEUERVERFAHREN
TELEPHONE PUBLIC A ENCAISSEMENT/CARTE D'APPEL ET SON PROCEDE DE COMMANDE

(30) Priority: 19.06.1992 KR 1992106
(43) Date of publication of application: 06.07.1994
(73) Proprietor: KOREA TELECOMMUNICATIONS AUTHORITY, Seoul 110-050 (KR)
(72) Inventor: KIM, Eun, Ho 8-77, Boelkwang-dong, Seoul 122-040 (KR); JIN, Byung, Wook Taeyang Apt. Madong 208, Dongdaemon-ku Seoul 130-030 (KR); JOO, Woon, Yong 89-1, Yangjae-dong, Seoul 137-130 (KR); YOON, Jeong, Nam 1564-41, Shinrim 2-dong, Seoul 151-010 (KR)
(74) Representative: Cline, Roger Ledlie
(86) International application number: KR9300051
(87) International publication number: WO9400947

(56) References cited:
- EP-A- 0 185 365
- US-A- 4 731 818
- PATENT ABSTRACTS OF JAPAN, Vol. 13, No. 121, (24-03-89); & JP,A,63 290 449, (OMRON).

## Description

### BACKGROUND OF THE INVENTION

### Field of the Invention

This invention relates to a coin/card operated public telephone and its controlling method, and more particularly to a coin/card operated public telephone capable of making local, toll, and international calls using coins, credit card, or IC (Integrated Circuit) card and of being centrally managed from a remote location and to its controlling method.

### Information Disclosure Statement

Generally, public telephones of a coin-type, pre-paid card type, and post-paid card type are available for use to the public. In a coin-type telephone, a caller can make a call by inserting certain amount of coins into the public telephone. However, a caller experiences difficulties in making a long-distance call, long lasting call, and international call since the coin-type telephone can only accommodate a limited amount of coins at one time.

In a pre-paid card type telephone widely used today, a caller can make a call by inserting a plastic card (2000, 3000, and 5000 Wons) into the public telephone. However, the disadvantages are that the content of card can be easily damaged and erased due to its weak coercive force and the amount of information that can be recorded in the pre-paid card type telephone is limited. Therefore, it is extremely difficult to make the functional improvements and provide additional services.

In a post-paid card type telephone, a caller pays for the calls he has made through the post-paid card type telephone using his credit card afterwards.

Due to the problems of telephone hardwares, the existing types of public telephones mentioned above are not capable of providing services such as informing the receiver's telephone number and announcing the time used. Also, since their built-in memories must be replaced in order to change programs or call charges per unit, maintenance cost/time is increased because a manager must maintain and repair the public telephones and thus, dropping their efficiency. Examples of prior art telephones including features as set out in the preamble to claim 1 can be found in US-A-4 731 818, EP-A-0 185 365 and Patent Abstracts of Japan No. 63-290 449.

It is an object of the present invention to provide a coin/card operated public telephone capable of making local, toll, and international calls using coins, credit card, or IC card as well as to provide a controlling method which will carry out the functions required to eliminate the previously mentioned disadvantages.

It is another object of the present invention to provide a coin/card operated public telephone capable of making voice announcements regarding its operation method to the caller through the handset.

It is still another object of the present invention to provide graphic/character information through LCD (Liquid Crystal Display) of the coin/card operated public telephone in Korean as well as in English characters.

It is still another object of the present invention to provide a coin/operated public telephone capable of transmitting fault status that has been detected as a result of a highly reliable self-diagnosis carried out by receiving control signals from a remotely located central management system.

In order to accomplish the above mentioned objectives, the public telephone of the present invention comprises a controller that controls the entire telephone, a memory that stores programs and data, a speech circuit for interfacing with the telephone lines and for voice transmission, a coin processing unit used to select and store coins, a card reader used to read and write an IC card and magnetic credit card, a modem used for authorizing a magnetic credit card data transmission, a voice synthesizing circuit for service announcement through voice, an LCD for character/graphic information display, a keypad for inputting telephone number, special buttons used for an emergency call, re-dialing, sound control and language selection, function buttons used for the IC card, various sensors for central management, and a power supply unit used to supply power to the entire telephone.

To accomplish the objectives of the present invention according to a method for controlling the coin/card public telephone, all the data are initialized from the start signal and automatic diagnosis is carried out to find out whether any fault has occurred. If any fault is found by the above automatic diagnosis, a step where the fault is found is recorded and an evaluation on impossibility of making a call is made.

When no fault is found and it is possible to make a call, an evaluation is made to find out whether the diagnostic switch is activated. In case the diagnostic switch is activated, a diagnosis is carried out and its result is recorded.

But, in case the diagnostic switch is not activated, an evaluation to find out whether coins have been inserted properly is made. When the evaluation carried out in the above step shows that the coins have been inserted properly, a call may be made in a coin call mode.

If the coins have not been inserted, an evaluation is made to find out whether a credit card has been inserted. When the credit card has been inserted, a call may be made in a credit card call mode.

If the credit card has not been inserted, an evaluation is made to find out whether an IC card, instead of a credit card, has been inserted. When the IC card has been inserted, a call may be made in an IC card call mode.

In case the IC card has not been inserted, an evaluation is made to find out whether an emergency button has been activated. When the emergency button has been activated, a call may be made in an emergency call mode.

If the emergency button has not been activated, an evaluation on On-hook state is made. If the telephone is not in On-hook state, the telephone returns to the evaluation step in order to find out whether the diagnosis switch was activated when no fault was found and whether the call may be made.

As described above, local, toll, and international calls can be made. Moreover, since the centralized management is possible from a remote location by using the coin/card operated public telephone according to the present invention, a more efficient maintenance and repair service may be accomplished.

### BRIEF DESCRIPTION OF DRAWINGS

For fuller understanding of the nature and objects of the invention, reference should be had to the following detailed description taken in conjunction with the accompanying drawings in which:

Fig. 1 is a configuration diagram depicting an operational environment of a coin/card operated public telephone according to the present invention.

Fig. 2 is a configuration diagram of a coin/card operated public telephone according to the present invention.

Fig. 3A through Fig.3B are flow charts on the operations described in Fig.2.

### DESCRIPTION OF THE PREFERRED EMBODIMENTS

The novel feature of the present invention may be understood from the accompanying description when taken in conjunction with the accompanying drawings where similar reference characters refer to similar parts throughout the several views of the drawings.

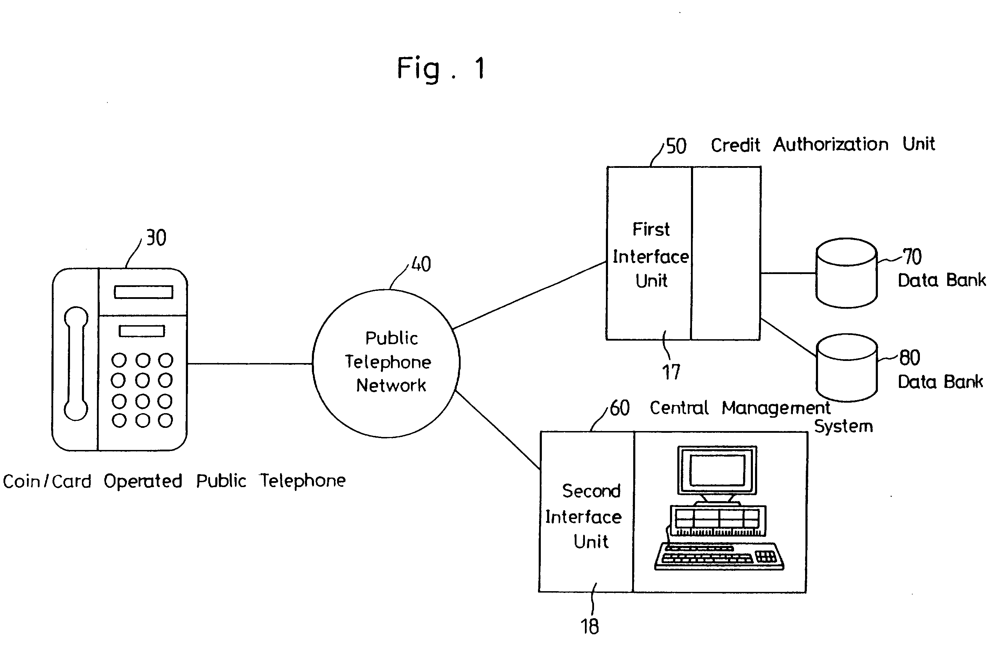

Fig. 1 is a configuration diagram of operational environment of a coin/card operated public telephone used to describe the characteristics according to the present invention. As shown in Fig. 1, the coin/card operated public telephone 30 is connected to a Public Telephone Network 40 and the Public Telephone Network 40 is connected to a Credit Authorization Unit 50 and a Public Telephone Central Management System 60. Each of the Credit Authorization Unit 50 and the Central Management System 60 has a first and second interface units 17, 18 used for interfacing with the Public Telephone Network 40, respectively. Two data banks 70 and 80, used to record the balance of a credit card, are connected to the Credit Authorization Unit 50.

When coins are inserted into a coin/card operated public telephone 30, a caller can make a call with a called party via the Public Telephone Network 40. When a credit card is inserted into the public telephone, the public telephone checks whether the inserted credit card is a valid one using data bank 70 and 80 connected to the Credit Authorization Unit 50 and informs the result to the caller by means of voice or character/graphic displayed on the LCD. If the credit card is a valid one, a caller may make a call to a subscriber he likes to converse with via the Public Telephone Network 40.

On the other hand, the information on billing details and fault status of the public telephone 30 are sent to the Public Telephone Central Management System 60 when the public telephone 30 receives an information request signal from the Central Management System 60. The Central Management System 60, upon receiving the information from the public telephone 30, analyzes them and outputs messages corresponding to the information received.

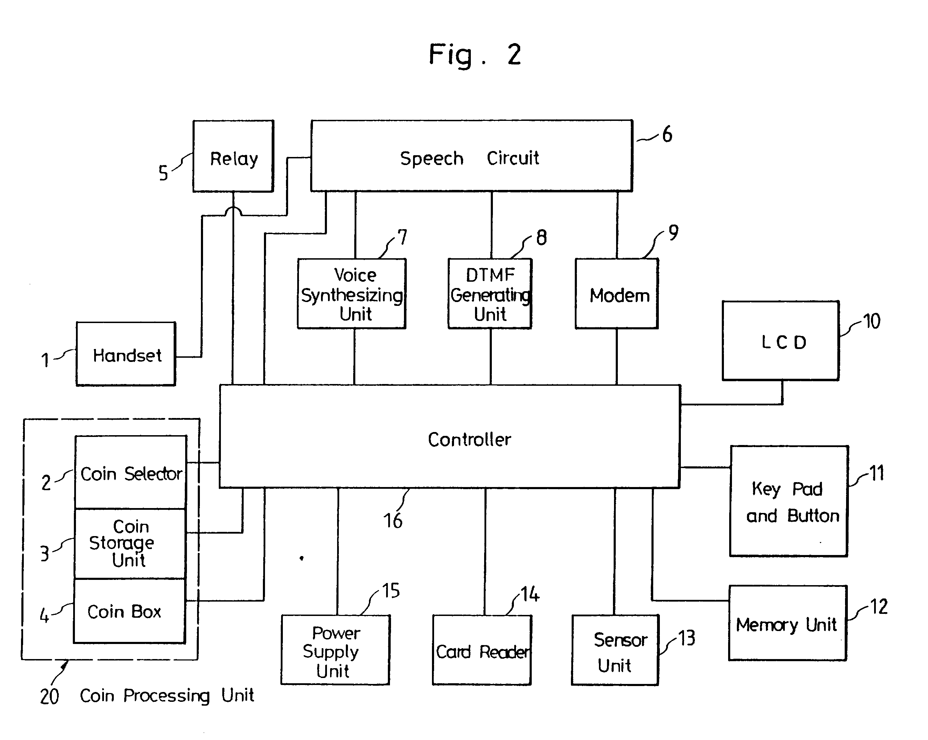

Fig. 2 is a configuration diagram according to the public telephone of the present invention. As shown in Fig. 2, a coin processing unit 20 used to select and store coins that had been inserted, a card reader 14 for reading and writing an IC card/credit card, a memory unit 12 for storing various programs and data, an LCD 10 for displaying information as character and graphic, a keypad and buttons 11 for inputting telephone numbers, a sensor unit 13 consisting of various sensors used for central management, and a power supply unit 15 used for supplying power are connected to a controller 16 that controls the entire system.

Moreover, a voice synthesizing circuit 7 used for voice announcement service, a DTMF (Dual Tone Multi Frequency) generating unit 8 used to generate DTMF signal by inputting telephone numbers through the key pad and buttons 11, and a modem 9 used for data transmission with a credit authorization unit 50, a public telephone central management system 60, are connected to the controller 16. Furthermore, a speech circuit 6 used for interfacing with the telephone line from the voice synthesizing circuit 7, the DTMF generating unit 8, and the modem 9 and for transmitting voice is connected to the controller 16 and a handset 1 used for calls made to the called parties is connected to the speech circuit 6.

The operations carried out by the public telephone according to the present invention will now be described in detail.

In case of a coin operated call, when a caller lifts up the handset 1 and inserts the coins (more than basic charge) into the slot of the public telephone, a coin selector 2 discriminates the coins and then stores the coins in a coin storage unit 3. At the same time, a relay 5 is activated in order to seize the exchange line (Off-hook state) and the amount of the inserted coins is displayed on an LCD 10. As telephone numbers are inputted via a key pad and buttons 11, DTMF signals are generated at a DTMF generating unit 8 and a speech circuit 6 is connected to a Public Telephone Network 40 in order to make a call circuit with the called party. Therefore, the caller can converse with the called party through the handset 1 of the public telephone. As soon as the call is over, the coins that had been stored in the coin storage unit 3 are transferred to the coinbox 4.

In case of a card-operated call, a controller 16 of the public telephone reads the card content through a card reader 14 and calls a credit authorization unit 50 through a DTMF generating unit 8 after the caller lifts up the handset 1 and inserts a card into the card reader 14. Once the credit authorization unit 50 is connected, the controller 16 sends the data, that had been read, to the modem 9. The modem 9 modulates the data that had been inputted and sends them to the credit authorization unit 50 through a speech circuit 6 and the Public Telephone Network 40. The credit authorization unit 50 searches the received data and sends the searched result to the modem through the Public Telephone Network 40 and speech circuit 6. The modem 9 demodulates the searched result and inputs it into the controller 16. In other words, if the searched result shows that the card is a valid one, the controller 16 activates the relay 5 and connects the exchange line. Then, the caller can make a call and start to talk to the called party by pressing the telephone numbers of called party through the key pad and buttons 11 after hearing the dial tone.

When the call is over, the public telephone stores the billing information of the call in a memory unit 12. Thereafter, when the next caller make a call, the public telephone notifies this information to the credit authorization unit 50 through the modem 9. In case the card is detected to be an invalid one, the controller 16 transmits the voice data from the memory unit 12 to the voice synthesizing unit 7 and the voice synthesizing unit 7 combines the voice by assembling the voice data and verbally informs the caller that the card is an invalid one. At the same time, it notifies the caller such fact by characters and graphics displayed on the LCD 10.

In case of a call using an IC card, after a caller lifts up the handset 1 and inserts an IC card into the card reader 14, the controller 16 reads the amount recorded in the IC card and activates the relay 5 for exchange line connection if the amount that has been read exceeds the local charging unit. Then, the caller can press the number of called party through the key pad and buttons 11 and make a call with the called party after hearing a dial tone. When the caller first hears a charging pulse during the conversation, the unit charge is subtracted from the amount displayed on LCD.

The remaining amount and charging unit is compared for continuous charging pulse. If the remaining amount is less than the unit charge, the exchange line is disconnected (On-hook state). If the remaining amount is greater than the unit charge, it is subtracted. This procedure is repeated until the caller terminates the call.

On the other hand, the sensor unit 13 detects the door open status, handset disconnection status, internal battery voltage, AC power supply voltage, line current and voltage, surrounding temperature and humidity. As the central management system 60 requests the data collected as a result of detection, the sensor unit 13 sends them to the central management system 60.

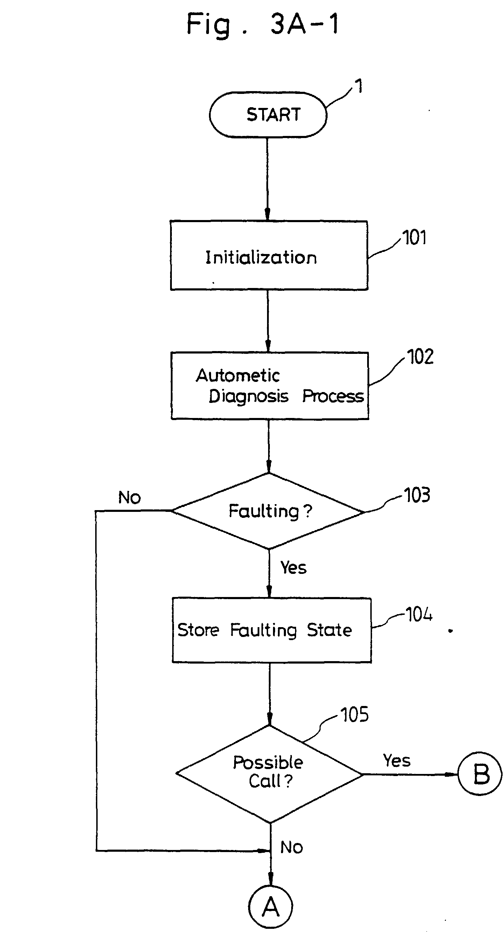

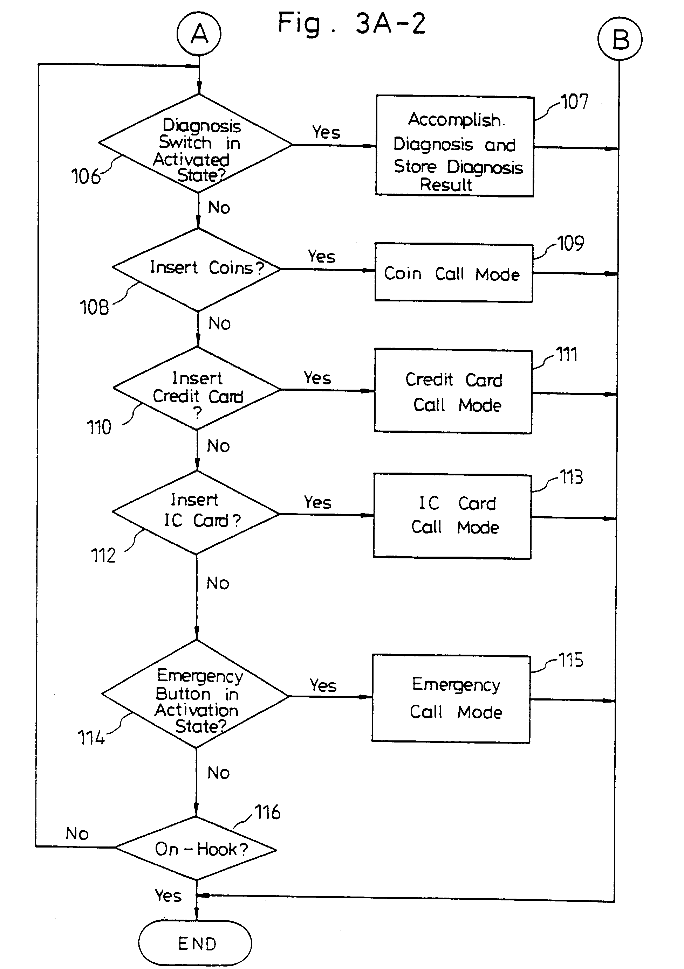

Fig. 3A through 3B are flow charts used to explain the operations described in Fig.2.

As shown in Fig. 3A, all the data are initialized in step 101 from the start signal generated by lifting up the handset and the operation proceeds to step 102. In step 102, an automatic diagnosis of a coin/card operated public telephone is carried out and the operation proceeds to step 103. In step 103, an evaluation to find out whether any faults had occurred in the public telephone is carried out.

If faults are found, fault details are recorded in step 104 and the operation proceeds to step 105. If no fault had occurred in step 103, the operation proceeds to step 106. In step 105, if the call is evaluated to be impossible, the operation is terminated and if the call is evaluated to be possible, the operation proceeds to step 106. In step 106, an evaluation as to whether the diagnostic switch is in an activated state is made. If the diagnostic switch is activated, the operation proceeds to step 107 to carry out the diagnosis. Then, the result of the diagnosis is recorded and the activation is terminated. If the diagnostic switch is not in an activated state, the operation proceeds to step 108 where an evaluation as to whether the coins have been inserted properly is made.

If the coins have been properly inserted in step 108, the operation proceeds to step 109 so that the public telephone changes into a coin call mode. Thereafter, the activation is terminated after completing the call. If no coins have been inserted, the operation proceeds to step 110 where an evaluation to find out whether the credit card has been inserted is made. If the credit card is found to have been inserted in step 110, the operation proceeds to step 111 so that the public telephone changes into a credit card call mode. Thereafter, the activation is terminated after completing the call. If the credit card is found not to have been inserted, the operation proceeds to step 112 where an evaluation to find out whether the IC card has been properly inserted is made. If the IC card is found to have been inserted in step 112, the operation proceeds to step 113 and the public telephone changes into an IC card call mode and then stops activating after completing the call. If the IC card has not been properly inserted, the operation proceeds to step 114 where an emergency button is in an activation state. If the emergency button is in an activation state, the operation proceeds to step 115 so that the public telephone changes into the emergency call mode. Thereafter, the activation of public telephone is terminated after completing the call. If the emergency button is not in an activation state, the operation proceeds to step 116. In step 116, an evaluation to find out whether the public telephone is in on-hook state is carried out. If it is in on-hook state, the activation terminates and if not, the operation returns to step 106.

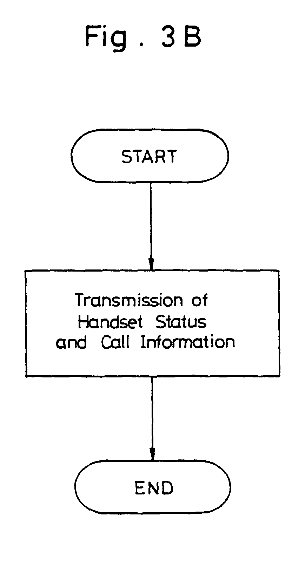

Fig. 3B is a flow chart illustrating the status of the coin/card operated public telephone 30 and the transmission of the call information and the termination of the activation of the coin/card operated public telephone 30 when the public telephone receives a call from the central management system 60 in on-hook mode.

Although this invention has been described in its preferred form with a certain degree of particularity, it is appreciated by those skilled in the art that the present disclosure of the preferred form has been made only by way of example and that numerous changes in the details of the construction, combination and arrangement of parts may be made without departing from the scope of the invention.

## Claims

1. A coin/card operated public telephone (30) for making local, toll, and international calls using coins, credit card, or IC card, comprising:
a controller (16) for controlling the public telephone;
a key pad and buttons (11) connected to said controller;
a coin processing device (20), connected to said controller, for selecting and storing the coins that have been inserted;
a DTMF generating unit (8), connected to said controller, for generating DTMF signals in accordance with the operation of said keypad and said buttons;
a memory unit (12) for storing programs, required to control said controller, and fault and billing details;
a voice synthesizing unit (7), connected between said controller (16) and a speech circuit, for combining the voice data stored in said memory unit;
a card reader (14), connected to said controller, for reading and writing said IC card or said credit card;
a modem (9), connected between said controller and said speech circuit, for modulating the content of card that have been read through said card reader and the data received from a central management system and a credit authorization unit; and
an LCD (10), connected to said controller, for displaying the cell announcement message and the amount of coins that have been inserted, characterised by
a sensor unit (13), connected to said controller, for detecting the door open status, internal battery voltage, line current and voltage, and surrounding temperature;

2. A method for controlling a coin/card operated public telephone making local, toll, and international calls using coins, credit card, or IC card, comprising the steps of:
initializing all the data from a start signal and carrying out an automatic diagnosis;
evaluating to find out whether any fault has occurred by carrying out said automatic diagnosis;
storing the fault status when fault is found as a result of said automatic diagnosis;
evaluating to find out whether the call is impossible to make;
evaluating to find out whether a diagnostic switch is activated when no fault is found by said automatic diagnosis;
carrying out a diagnosis when said diagnostic switch is activated as a result of evaluation and storing the result of said diagnosis;
evaluating to find out whether coins have been properly inserted when said diagnostic switch is found not to have been activated;
making a call in a coin call mode when coins have properly been inserted;
evaluating to find out whether a credit card has been properly inserted when no coins were inserted;
making a call in a credit card mode when said credit card has been inserted properly;
evaluating to find out whether an IC card has been properly inserted when no said credit card was inserted;
making a call in an IC card mode when said IC card is inserted;
evaluating to find out whether an emergency button is activated when no said IC card has been inserted;
making a call in an emergency call mode when said emergency button is activated;
evaluating On-hook state when said emergency button has not been activated; and
returning to the evaluating step to find out whether said diagnosis switch is activated when no fault is found and whether said call can be made, if said public telephone is not in On-hook state,
characterised by detecting the door open status, internal battery voltage, line current and voltage and surrounding temperature of the telephone.

## Patentansprüche

1. Münz- bzw. kartenbetriebenes öffentliches Telefon (30) zum Tätigen von Orts-, Fern- und Auslandsanrufen unter Verwendung von Münzen, Kreditkarten oder IC-Karten, das folgendes umfaßt:
eine Steuereinheit (16) zum Steuern des öffentlichen Telefons;
ein Tastenfeld und Tasten (11), die an die Steuereinheit angeschlossen sind;
eine an die Steuereinheit angeschlossene Münzenverarbeitungsvorrichtung (20) zum Auswählen und Speichern der Münzen, die eingeworfen worden sind;
eine an die Steuereinheit angeschlossene Doppelton-Mehrfrequenz-Erzeugungseinheit (8) zum Erzeugen von Doppelton-Mehrfrequenzsignalen gemäß der Bedienung des Tastenfelds und der Tasten;
eine Speichereinheit (12) zum Speichern von Programmen, die dazu benötigt werden, die Steuereinheit zu steuern, und von Fehler- und Verrechnungseinzelheiten;
eine zwischen der Steuereinheit (16) und einem Sprechkreis angeschlossene Sprachsynthetisierungseinheit (7) zum Kombinieren der in der Speichereinheit gespeicherten Sprachdaten;
ein an die Steuereinheit angeschlossener Kartenleser (14) zum Lesen und Beschreiben der IC-Karte bzw. der Kreditkarte;
ein zwischen der Steuereinheit und dem Sprechkreis angeschlossenes Modem (9) zum Modulieren des Inhalts von Karten, die durch den Kartenleser gelesen worden sind, und der Daten, die von einem zentralen Verwaltungssystem und einer Kreditbewilligungseinheit empfangen worden sind; und
eine an die Steuereinheit angeschlossene LCD-Anzeige (10) zum Anzeigen der Anrufansagebotschaft und des Betrags von Münzen, die eingeworfen worden sind, gekennzeichnet durch
eine an die Steuereinheit angeschlossene Sensoreinheit (13) zum Erfassen des Tür-offen-Zustands, der internen Batteriespannung, dem Leitungsstrom sowie der Leitungsspannung und der Umgebungstemperatur.

2. Verfahren zum Steuern eines münz- bzw. kartenbetriebenen öffentlichen Telefons zum Tätigen von Orts-, Fern- und Auslandsanrufen unter Verwendung von Münzen, Kreditkarten oder IC-Karten, das die folgenden Schritte umfaßt:
das Initialisieren aller Daten von einem Startsignal aus und das Ausführen einer automatischen Diagnose;
Auswerten, um zu ermitteln, ob durch das Ausführen der automatischen Diagnose ein Fehler aufgetreten ist;
das Speichern des Fehlerzustands, wenn als Folge der automatischen Diagnose ein Fehler gefunden wird;
Auswerten, um zu ermitteln, ob es unmöglich ist, den Anruf zu tätigen;
Auswerten, um zu ermitteln, ob ein Diagnoseschalter aktiviert ist, wenn von der automatischen Diagnose kein Fehler gefunden wird;
das Ausführen einer Diagnose, wenn der Diagnoseschalter als Folge der Auswertung aktiviert wird, und das Speichern des Ergebnisses der Diagnose;
Auswerten, um zu ermitteln, ob Münzen richtig eingeworfen worden sind, wenn ermittelt wird, daß der Diagnoseschalter nicht aktiviert wurde;
das Tätigen eines Anrufs in einem Münzrufmodus, wenn Münzen richtig eingeworfen worden sind;
Auswerten, um zu ermitteln, ob eine Kreditkarte richtig eingeführt worden ist, wenn keine Münzen eingeworfen worden sind;
das Tätigen eines Anrufs in einem Kreditkartenmodus, wenn die Kreditkarte richtig eingeführt worden ist;
Auswerten, um zu ermitteln, ob eine IC-Karte richtig eingeführt worden ist, wenn keine solche Kreditkarte eingeführt worden ist;
das Tätigen eines Anrufs in einem IC-Karten-Modus, wenn die IC-Karte eingeführt ist;
Auswerten, um zu ermitteln, ob eine Notfalltaste aktiviert ist, wenn keine solche IC-Karte eingeführt worden ist;
das Tätigen eines Anrufs in einem Notrufmodus, wenn die Notfalltaste aktiviert ist;
das Auswerten des Einhängezustands, wenn die Notfalltaste nicht aktiviert worden ist; und
die Rückkehr zum Auswertungsschritt, um zu ermitteln, ob der Diagnoseschalter aktiviert ist, wenn kein Fehler gefunden wird, und ob der Anruf getätigt werden kann, wenn sich das öffentliche Telefon nicht im Einhängezustand befindet,
gekennzeichnet durch das Erfassen des Tür-offen-Zustands, der internen Batteriespannung, des Leitungsstroms sowie der Leitungsspannung und der Umgebungstemperatur des Telefons.

## Revendications

1. Téléphone public à pièces/cartes (30) pour faire des appels locaux, interurbains et internationaux en utilisant des pièces, des cartes de crédits ou des cartes à circuits intégrés, comprenant:
un contrôleur (16) pour piloter le téléphone public;
un clavier et des boutons (11) connectés audit contrôleur;
un dispositif de traitement de pièces (20) connecté audit contrôleur pour sélectionner et stocker les pièces qui ont été insérées;
une unité de génération d'une signalisation multifréquence (8) connectée audit contrôleur pour générer des signaux de signalisation multifréquence en fonction de la manipulation dudit clavier et desdits boutons;
une unité de mémoire (12) pour mémoriser des programmes requis pour piloter ledit contrôleur, ainsi que des détails concernant les dérangements et la facturation;
une unité de synthèse vocale (7) connectée entre ledit contrôleur (16) et un circuit de conversation pour combiner les données vocales mémorisées dans ladite unité de mémoire;
un lecteur de carte (14) connecté audit contrôleur pour lire et enregistrer ladite carte à circuits intégrés ou ladite carte de crédit;
un modem (9) connecté entre ledit contrôleur et ledit circuit de conversation pour moduler le contenu de la carte qui a été lue via ledit lecteur de carte, ainsi que les données émanant d'un système de gestion central et d'une unité d'autorisation de crédit; et
un affichage à cristaux liquides (10) connecté audit contrôleur pour afficher le message d'annonce d'appel et le nombre de pièces qui ont été insérées, caractérisé par
une unité de capteur (13) connectée audit contrôleur pour détecter l'état de porte ouverte, la tension de la batterie interne, le courant et la tension de ligne, ainsi que la température ambiante.

2. Procédé pour commander un téléphone public à pièces/cartes permettant de faire des appels locaux, interurbains et internationaux en utilisant des pièces, des cartes de crédits ou des cartes à circuits intégrés, comprenant les étapes consistant à:
initialiser toutes les données à partir d'un signal de départ et mettre en oeuvre un diagnostic automatique;
procéder à une évaluation afin de vérifier la présence ou l'absence d'un quelconque dérangement par la mise en oeuvre dudit diagnostic automatique;
mémoriser l'état de dérangement lorsqu'un dérangement est détecté suite audit diagnostic automatique;
procéder à une évaluation afin de vérifier le fait de savoir si l'appel est impossible à faire;
procéder à une évaluation afin de vérifier le fait de savoir si un commutateur de diagnostic est activé lorsqu'aucun dérangement n'a été détecté par ledit diagnostic automatique;
mettre en oeuvre un diagnostic lorsque ledit commutateur de diagnostic est activé suite à l'évaluation et à la mémorisation du résultat dudit diagnostic;
procéder à une évaluation afin de vérifier le fait de savoir si les pièces ont été insérées comme il se doit lorsqu'il s'avère que ledit commutateur diagnostic n'a pas été activé;
faire un appel dans un mode d'appel par pièces lorsque des pièces ont été insérées comme il se doit;
procéder à une évaluation afin de vérifier le fait de savoir si une carte de crédit a été insérée comme il se doit en l'absence d'une insertion de pièces;
faire un appel dans un mode de carte de crédit lorsque ladite carte de crédit a été insérée comme il se doit;
procéder à une évaluation afin de vérifier le fait de savoir si une carte à circuits intégrés a été insérée comme il se doit en l'absence d'insertion de ladite carte de crédit;
faire un appel dans un mode de carte à circuits intégrés lorsque ladite carte à circuits intégrés a été insérée;
procéder à une évaluation afin de vérifier le fait de savoir si un bouton d'urgence a été activé en l'absence d'insertion de ladite carte à circuits intégrés;
faire un appel dans un mode d'appel d'urgence lorsque ledit bouton d'urgence est activé;
procéder à une évaluation de l'état raccroché lorsque ledit bouton d'urgence n'a pas été activé; et
retourner à l'étape d'évaluation pour vérifier le fait de savoir si ledit commutateur de diagnostic est activé lorsqu'aucun dérangement n'a été détecté et le fait de savoir si ledit appel peut être fait, si ledit téléphone public n'est pas à l'état raccroché,
caractérisé par le fait de détecter l'état de porte ouverte, la tension de la batterie interne, le courant et la tension de ligne, ainsi que la température ambiante du téléphone.
